# EUROPÄISCHE PATENTSCHRIFT

(11) **EP 1 507 831 B1**
(45) Veröffentlichungstag und Bekanntmachung des Hinweises auf die Patenterteilung: **05.09.2007**
(21) Anmeldenummer: 03755899.6
(22) Anmeldetag: 22.05.2003
(51) Int. Cl.: C09D 7/12, C09D 5/38, C09D 5/02, D21H 19/38, B05D 7/06, B05D 7/08, B05D 5/06, B27K 3/52

(54) **BESCHICHTUNGSMITTEL, VERWENDUNG UND BESCHICHTETE SUBSTRATOBERFLACHE**
COATING MEANS, USE, AND COATED SUBSTRATE SURFACE
AGENT DE REVETEMENT, SON UTILISATION ET SURFACE DE SUBSTRAT REVETUE

(30) Priorität: 29.05.2002 DE 10224109; 11.06.2002 DE 10225979
(43) Veröffentlichungstag der Anmeldung: 23.02.2005
(73) Patentinhaber: Eckart GmbH & Co. KG, 90763 Fürth (DE)
(72) Erfinder: MAUL, Robert, 90610 Winkelhaid (DE); KIEHL, Alfried, 91220 Schnaittach (DE); GORDON, Otto, W., CH-1143 Apples (CH); DONDERS, Kàroly, CH-3072 Ostermundingen (CH)
(74) Vertreter: Walcher, Armin
(86) Internationale Anmeldenummer: PCT/DE2003/001647
(87) Internationale Veröffentlichungsnummer: WO 2003/102090

(56) Entgegenhaltungen:
- EP-A- 0 477 433
- WO-A-91/04305
- DE-A- 3 739 332

## Beschreibung

Die Erfindung betrifft ein Beschichtungsmittel für Cellulose-haltige Substratoberflächen mit einer Flüssigphase und Bindemittel. Die Erfindung betrifft ferner die Verwendung des Beschichtungsmittels sowie mit dem Beschichtungsmittel beschichtete Substratoberflächen.

Holz wird in der Freibewitterung oberflächlich stark verändert und erhält dadurch ein ungleichmässiges Aussehen, welches sich in braunen Flecken und später in ungleichmässiger Vergrauung manifestiert. Ungeschütztes Holz wird langfristig durch Witterungseinflüsse völlig zerstört. Die Zerstörung von Holz durch Witterungseinflüsse ist unter anderem auf Wasser oder Feuchtigkeit, Ultraviolettes Licht, Sauerstoff, Pilze und tierische Schädlinge zurückzuführen.

Aus dem Artikel "Natural finishes for exterior timber," in Pigment and Resin Technology, April 1986, S. 10 ff., ist bekannt, daß Holz, welches Regen und Sonnenlicht ausgesetzt wird, seine ursprüngliche Farbe verliert. Dies ist teilweise auf die Extraktion wasserlöslicher Komponenten zurückzuführen, insbesondere jedoch auf den Abbau von Lignin und anderer Komponenten im Holz durch den Einfluß des UV-Strahlungsanteils im Sonnenlicht. In der Praxis zeigt sich immer wieder, dass Schäden vor allem auftreten, wenn mehrere Einflüsse gleichzeitig wirksam sind.

Aus der EP 0 113 150 ist bekannt, Holz oder Holzfasern enthaltende Substrate mit einem oxidativ trocknenden Beschichtungsmittel auf Basis von Alkydharzen zu beschichten.

In der WO 91/04305 wird eine wasserabstoßende Beschichtungszusammensetzung beschrieben, die u.a. wasserlösliche Metallkomplex-Vernetzer enthält. Hierbei handelt es sich insbesondere um Ammoniumzirkoniumcarbonat. Zusätzlich können die Beschichtungen zur weiteren Hydrophobierung Wachse enthalten. Diese Beschichtungszusammensetzung bietet jedoch nachteiligerweise keinen Schutz von Holz gegenüber UV-Licht.

Eine transparente hydrophobe Holzbeschichtungsdispersion, basierend auf organofunktionellen Silanen, wird in der WO 93/08006 beschrieben, die jedoch aufgrund der Transparenz keinen zufriedenstellende Langzeitschutz gegenüber UV-Licht bietet.

In Holzbeschichtungsmaterialien werden auch UV-Absorber, beispielsweise transparente Eisenoxide [Symposium Fa. Sachtleben, UV-Schutzmittel 2000] eingesetzt, welche einen Teil des UV-Lichtes vom Holz abhalten, jedoch keinen vollständigen und lang währenden Schutz vor UV-Licht bieten. Weitere UV-Schutzmittel sind sterisch gehinderte Amine (HALS) der Fa. Ciba Geigy [Symposium Fa. Sachtleben, UV-Schutzmittel 2000].

Aus der WO 98/22539 sind ferner nanoskalige Kem-Hülle-Si-Teilchen als UV-Lichtabsorber bekannt. Die Teilchen weisen einen Durchmesser von weniger als 500 nm auf. Durch geeignete Dicken des Si-Kernes und der Umhüllung kann die UV-Absorption dieser Teilchen auf das eingestrahlte UV-Licht angepaßt werden. Gegenüber der Wellenlänge elektromagnetischer Strahlung des sichtbaren Bereiches (400-700 nm) verhalten sich diese Teilchen transparent.

Plättchenförmige Metallpigmente vermögen sich in einer Beschichtung parallel zum Substrat zu orientieren. Bei ausreichend hoher Pigmentierungshöhe kann eine vollständige Abdeckung gegenüber dem Substrat erreicht werden.

Aluminiumpigmente ohne korrosionsbeständige Beschichtung eignen sich dabei nicht für eine Beschichtung von Holz für Außenanwendungen, da durch den Einfluß von Feuchtigkeit in dem Holz die Aluminiumpigmente mit der Zeit korrodieren und sich schließlich zu Aluminiumoxid auflösen. Dies ist insbesondere dann nachteilig, wenn die Aluminiumpigmente der Beschichtung noch einen dekorativen Effekt verleihen sollen, da die Korrosion mit einer optischen Vergrauung einhergeht.

Ein sehr bedeutender Aspekt ist die Haftung der Metallpigmente in der Beschichtung. Plättchenförmige Metallpigmente stellen immer eine Störung der Beschichtung dar. Dies kann insbesondere bei Einwirkung von Wasser zu Haftungsproblemen führen. In der DE 198 20 112 ist beschrieben, wie derartige Haftungsprobleme von Effektpigmenten durch eine geeignete Oberflächenmodifizierung gelöst werden können. Die Oberflächenmodifizierung wird mit bifunktionellen Additiven durchgeführt. Diese verfügen einerseits über geeignete Ankergruppen zur Anbindung an das Effektpigment und anderseits über geeignete endständige funktionelle Gruppen, die eine Anbindung an das Bindemittel des Lackes ermöglichen.
Aufgabe der vorliegenden Erfindung ist es, einen zuverlässigen und langfristigen Bewitterungsschutz für Cellulose-haltige Oberflächen, insbesondere Holz- und Holzfasem-haltige Substrate, bereitzustellen.

Insbesondere soll ein Beschichtungsmittel zur Herstellung einer Beschichtung, die einen langandauernden Schutz gegenüber UV-Licht liefert, bereitgestellt werden.

Die der Erfindung zugrundeliegende Aufgabe wird durch ein Beschichtungsmittel für Cellulose-haltige Substratoberflächen mit einer Flüssigphase und Bindemittel gemäß Anspruch 1 gelöst. Das erfindungsgemäße Beschichtungsmittel umfasst plättchenförmige Pigmente und einen Haftvermittler, wobei die plättchenförmigen Pigmente korrosionsbeständig und für UV-Licht undurchlässig sind und wobei der Haftvermittler eine Bindung zwischen plättchenförmigen Pigmenten, Bindemittel und der Cellulose-haltigen Substratoberfläche bewirkt.

Vorteilhafte Weiterbildungen der Erfindung sind in den Unteransprüchen 2 bis 24 angegeben.

Die Aufgabe wird weiterhin durch die Verwendung eines Beschichtungsmittels nach einem der Ansprüche 1 bis 24 zur Beschichtung von Cellulose-haltigen Subtratoberflächen, vorzugsweise von Holz, Holzspäne enthaltenden Materialien, insbesondere Baumaterialien, oder Papier oder Papier-haltigen Materialien, gelöst.

Eine bevorzugte Weiterbildung der Erfindung ist im Unteranspruch 26 angegeben.

Die Aufgabe wird ferner durch eine Cellulose-haltige Substratoberfläche, die mit einem Beschichtungsmittel nach einem der Ansprüche 1 bis 24 beschichtet ist, gelöst.

Eine bevorzugte Ausführungsform ist in Anspruch 28 angegeben.

Das erfindungsgemäße Beschichtungsmittel stellt einen äußerst wirksamen UV-Schutz bereit. Durch die Verwendung von Pigmenten, die für UV-Licht undurchlässig sind, wird zuverlässig die Cellulose-haltige Oberfläche eines Substrates, beispielsweise von Holz, gegenüber UV-Licht vollständig geschützt. Das Beschichtungsmittel weist dabei einen Gehalt an plättchenförmigen Pigmenten auf, der zu einer vollständigen Bedeckung der zu schützenden Substratoberfläche führt. Dabei ordnen sich die sich die plättchenförmigen Pigmente vorzugsweise aneinander angrenzend und/oder in überlappender Form, d.h. schuppenartig, auf der Substratoberfläche an.

Allgemein eignen sich korrosionsbeständige, opake, plättchenförmige Pigmente, die sowohl für sichtbares Licht als auch für UV-Licht undurchlässig sind.

Durch die Verwendung eines Haftvermittlers, der eine Bindung zwischen plättchenförmigen Pigmenten, Bindemittel und der Cellulose-haltigen Substratoberfläche bewirkt, werden die plättchenförmigen Pigmente überraschend zuverlässig auf der Substratoberfläche fixiert. Es hat sich gezeigt, daß eine unter Verwendung des erfindungsgemäßen Beschichtungsmittels hergestellte Beschichtung über einen Zeitraum von mehreren Jahren, beispielsweise von mehr als fünf bis sechs Jahren, unter Freibewitterungsbedingungen außerordentlich stabil bzw. beständig ist. Diese überraschende Stabilität der Beschichtung wird auf den ausgebildeten Verbund zwischen den plättchenförmigen Pigmenten, der Cellulose-haltigen Oberfläche und dem Bindemittel zurückgeführt.

Das erfindungsgemäße Beschichtungsmittel eignet sich hervorragend sowohl als Grundierung, auf welche eine oder mehrere farbgebende Beschichtung(en) nachträglich aufgebracht werden kann bzw. können, als auch als Deckanstrich für Cellulose-haltigen Oberflächen.

Die unter Verwendung des erfindungsgemäßen Beschichtungsmittels hergestellte Beschichtung stellt sowohl einen äußerst wirksamen Schutz der Oberfläche des Cellulose-haltigen Substrates gegenüber UV-Strahlung als auch gegenüber Schädigung durch Nässe dar. Darüber hinaus hat sich überraschend gezeigt, daß es in einer solchen Beschichtung nicht zu einer Rissbildung bei Ausdehnung des Cellulose-haltigen Substrates, beispielsweise von Holz, aufgrund thermischer Einflüsse oder durch Quellung aufgrund einer Aufnahme von Feuchtigkeit oder Wasser kommt.

Überraschenderweise verfügt die unter Verwendung des erfindungsgemäßen Beschichtungsmittels hergestellte Beschichtung über eine Dampfoffenheit bzw. Dampfdurchlässigkeit. Diese Dampfdurchlässigkeit ermöglicht die Abgabe von in dem Cellulose-haltigen Substrat oder zwischen der Substratoberfläche und der aufgebrachten Beschichtung befindlicher Feuchtigkeit. Somit wird äußerst vorteilhaft ein Druckaufbau unter der Beschichtung und mithin ein Abplatzen oder Ablösen der Beschichtung vermieden. Die unter Verwendung des erfindungsgemäßen Beschichtungsmittels auf eine Substratoberfläche aufgebrachten dampfoffene Beschichtung weist folglich eine mikro- oder nanoporöse Struktur auf, die für Wasserdampf durchlässig ist.

Bevorzugt ist, wenn die plättchenförmigen Pigmente Metallpigmente mit einer korrosionsbeständigen Beschichtung sind.

Metallpigmente haben sich als sehr geeignet bei dem erfindungsgemäßen Beschichtungsmittel erwiesen. Metallpigmente sind im Hinblick auf ihre Dicke und ihr UV-Reflexionsvermögen für UV-Licht undurchlässig. Darüber hinaus wird auch Wärmestrahlung von diesen Pigmenten reflektiert. Mithin werden Cellulose-haltige Substratoberflächen, beispielsweise Baumaterialien aus Holz oder Holzfasern, beispielsweise Span- oder Faserplatten, gegenüber UV-Licht und Wärmestrahlung (IR-Strahlung) geschützt. Durch die Reflexion der Wärmestrahlung kommt es zu einer geringeren thermischen Erwärmung des beschichteten Materials als ohne eine solche Beschichtung. Insofern eignet sich das beschichtete Material auch als Wärmeschutz- bzw. dämmaterial. Als sehr geeignet haben sich korrosionsbeständig beschichtete Aluminiumpigmente erwiesen.

Weiterhin ist bevorzugt, daß die korrosionsbeständige Beschichtung aus der Gruppe ausgewählt wird, die aus Aluminiumoxidschicht, Silikatschicht, vorzugsweise eine unter Verwendung von Sol-Gel-Verfahren hergestellte SiO₂-Schicht (d.h. SiO₂ x nH₂O), Chromoxidschicht [EP 0 259 592], Acrylatschicht [EP 0 416 369], Aluminiumoxidschicht [DE 195 20 312] und übereinander angeordneten Schichten davon besteht.

Derartige Beschichtungen wurden vorzugsweise entwickelt, um korrosionsempfindliche Metallpigmente, wie Aluminium- oder Zinkpigmente, in wässrigen Formulierungen verwenden zu können.

Ungeschützte Aluminiumpigmente beispielsweise reagieren unter Bildung von Wasserstoff (Gasung). Bei Aluminium sind dem Fachmann mehrere Verfahren bekannt, um die Pigmente mit schützenden dreidimensionalen Schutzschichten zu versehen.

Bevorzugt sind Beschichtungen aus Silikat. Im Sinne der Erfindung wird unter dem Begriff "Silikat" sowohl eine im wesentlichen rein kristalline SiO₂-Beschichtung als auch insbesondere eine unter Sol-Gel-Verfahren hergestellte wasserhaltige SiO₂-Schicht, d.h. SiO₂ x nH₂O verstanden, wie in A. Kiehl und K. Greiwe, Progress in Organic Coatings 37, 1999, 179 beschrieben.

Insbesondere haben sich Metallpigmente als sehr geeignet erwiesen. Mit Oxidschichten, beispielsweise Aluminiumoxid, Chromoxid oder Silikat, vorzugsweise eine unter Verwendung von Sol-Gel-Verfahren hergestellte SiO₂-Schicht (d.h. SiO₂ x nH₂O), beschichtete Metallpigmente, weisen in der Oxidschicht eine ausreichende Anzahl von Hydroxylgruppen auf, die mit einem Haftvermittler, wie die unten beschriebenen Metallkomplexe und/oder einem funktionellen Organosilan, reagieren oder wechselwirken können.

Des weiteren besteht die Möglichkeit, die Pigmentoberfläche zusätzlich durch geeignete Oberflächenmodifizierungsmittel - wie in der DE 198 20 112 A1 und der EP 10 84 198 A1 beschrieben - zu beeinflussen. So können insbesondere chemische Funktionalitäten auf die Oberfläche der vorstehend angegebenen korrosionsbeständigen Beschichtungen aufgebracht werden, die eine gute Anbindung der Pigmentoberfläche an den Metallkomplex und/oder das Bindemittel und damit eine verbesserte Haftfestigkeit des Metallpigmentes in der aufgebrachten Beschichtung ermöglichen.

Bei einer weiteren erfindungsgemäßen Weiterbildung können auch eingefärbte Aluminiumpigmente, wie sie in der DE 195 01 307 beschrieben sind, verwendet werden. Hier sind Farbpigmente in die Silikatbeschichtung eingelagert und somit an der Oberfläche des Aluminiumpigmentes fixiert. Diese Pigmente ermöglichen weitere farbliche Varianten der erfindungsgemäßen Beschichtungszusammensetzung.

Die vorstehenden Beschichtungen umhüllen die Metallpigmente im wesentlichen vollständig, bevorzugt vollständig. Dadurch werden die Metallpigmente zuverlässig gegenüber korrodierenden Einflüssen, insbesondere vor Feuchtigkeit, geschützt.

Gemäß einer weiteren bevorzugten Ausführungsform sind die Metallpigmente aus Metallen, die aus der Gruppe ausgewählt werden, die aus Aluminium, Zink, Zinn, Kupfer, Eisen, Titan, Stahl, und Legierungen davon, vorzugsweise Goldbronze, besteht, hergestellt.

Als beschichtete Metallpigmente werden vorzugsweise beschichtete Pigmente aus Aluminium und dessen Legierungen und/oder Zink und dessen Legierungen verwendet. Besonders bevorzugt sind Aluminiumpigmente.

Derartige plättchenförmige Metallpigmente orientieren sich in der Beschichtung parallel zum Substrat. Die Dicke der Metallpigmente, die ca. 100 nm bis 500 nm beträgt, ist so hoch, daß weder UV- noch IR-Strahlung transmittiert werden kann. Durch die vorzugsweise schuppenförmige Anordnung der Metallpigmente nach dem Aufbringen des erfindungsgemäßen Beschichtungsmittels auf einem Cellulose-haltigen Substrat, wird daher ein praktisch vollständiger UV-Schutz des darunter liegenden Substrates erreicht. Insbesondere besitzen Aluminiumpigmente eine hohe IR-Strahlungsreflektivität. Dadurch kann die eingestrahlte Wärme gut an die Umgebung abgegeben werden. Die Beschichtung leidet weniger unter einer durch zu starke Temperaturwechsel bedingten Rißbildung, wie sie beispielsweise in "Lack auf Holz: Einflussgrössen und Wechselwirkungen", H. Pecina/O. Paprzycki, Curt R. Vincentz Verlag, Hannover, 1995, Hrsg. Ulrich Zorll, S.114 beschrieben ist.

Die korrosionsbeständige Beschichtung der plättchenförmigen Pigmente aus den vorgenannten Materialien weist üblicherweise eine Schichtdicke in einem Bereich von 5 nm bis 400 nm, vorzugsweise von 10 nm bis 150 nm auf.

Solche plättchenförmigen Pigmente wurden bislang noch nicht in Holzschutzformulierungen eingesetzt.

Die erfindungsgemäß verwendeten beschichteten Metallpigmente, die für den UV-Schutz von Cellulose-haltigen Substraten verwendet werden, sind im wesentlichen kreisförmig oder oval und weisen vorzugsweise einen maximalen Durchmesser von 1 µm bis 250 µm, vorzugsweise von 5 µm bis 70 µm, auf.

Die Verwendung von Metallpigmenten in dem erfindungsgemäßen Beschichtungsmittel bewirkt nach Aufbringung auf Holzmaterialien ein metallisches Aussehen. Derartig beschichtete und mithin gegenüber Witterungseinflüssen geschützte Holzmaterialien, beispielsweise Holzplatten, Bretter oder Holzpfosten, eignen sich hervorragend als Fassadenverkleidungen anstelle von Metallblechen, Stahlträgern, Eternitverkleidungen oder mineralischen Baustoffen.

Die moderne Architektur greift im Industriebau immer mehr auf den Baustoff Holz zurück. Dies äußert sich in der Verwendung von Schichtholzplatten, Waferboard, Sperrholzplatten bis hin zur Spanplatte. Gegenüber mineralischen Platten wie Eternit oder metallischen Platten wie Aluminium oder Zink müssen aus Holz bestehende Systeme in der Regel beschichtet werden. Die zur Zeit bekannten Beschichtungssysteme für Holzfassaden bieten einen Schutz für maximal 5 Jahre. Danach wird eine Nachbehandlung des Holzes nötig. Das erfindungsgemäße Beschichtungsmittel schützt Holz oder holzartige Substrate länger als 5 bis 6 Jahre in der Freibewitterung. Die mit dem erfindungsgemäßen Beschichtungsmittel beschichteten Holzbaustoffe stehen mithin für den Einsatz im Industriebau zur Verfügung.

Ein großer Vorteil von derart geschützten Holzsystemen im industriellen Fassadenbau ist der geringere Preis des Gesamtsystems, verbesserte thermische Raumeigenschaften bei Verwendung der beschichteten Holzmaterialien, die Verfügbarkeit von Holz in holzreichen Gegenden und die Tatsache, daß Holz ein nachwachsender Rohstoff ist und daß die erfindungsgemäß beschichteten Baumaterialien Metall nur in sehr geringen Mengen beispielsweise in Form von Metallpigmenten enthalten.

Vorzugsweise werden als Metallpigmente Silikat-beschichtete Aluminium-, Zink-, Zinn-, Kupfer-, Eisen-, Titan-, Stahl-, oder Goldbronzepigmente verwendet.

Gemäß einer bevorzugten Ausführungsform ist der Haftvermittler ein Metallkomplex mit einem oder mehreren organischen Liganden, wobei der Metallkomplex als Zentralion(en) ein oder mehrere Metallkation(en) enthält, die aus der Gruppe, die aus B, Al, Si, Ge, Sn, Pb, Ti, Zr, V, Cr, Mo, Mn, Fe, Zn und Mischungen davon besteht, ausgewählt werden und der Metallkomplex wenigstens zwei funktionelle Gruppen oder Liganden aufweist, die mit Hydroxylgruppen einen Komplex bilden oder eine kovalente Bindung ausbilden oder durch Hydroxylgruppen unter Ausbildung einer Sauerstoff-Zentralkation-Bindung aus dem Komplex verdrängt werden.

Weiterhin ist bevorzugt, daß an dem einen Metallkation oder den mehreren Metallkationen des Metallkomplexes wenigstens zwei hydrolysierbare anorganische oder organische Liganden oder zwei Hydroxylionen koordiniert sind.

Als hydrolysierbare Liganden können anorganische Liganden, beispielsweise Halogeno, vorzugsweise Chloro, Carbonato, Hydrogencarbonato, etc., oder organische Liganden, beispielsweise Alkoxyliganden, wie bespielsweise Methoxy, Ethoxy, Propoxy, Isopropoxy, Butoxy, etc., verwendet werden.

Es ist ferner bevorzugt, daß wenigstens ein organischer Ligand an dem einen Metallkation oder den mehreren Metallkationen des Metallkomplexes über eine Carboxylgruppe oder mehrere Carboxylgruppen koordiniert ist.

Hierfür haben sich insbesondere Fettsäuren mit 3 bis 30 Kohlenstoffatomen als sehr geeignet erwiesen. Es können Mono- oder Dicarbonsäuren oder aber auch Polycarbonsäuren verwendet werden.

Vorzugsweise ist wenigstens ein organischer Ligand hydrophob.

Beispielsweise können Alkyl- , Aryl, Alkylaryl- und/oder Arylalkyl-Liganden verwenden werden. Vorzugsweise werden Wachse oder Fettsäuren mit wenigstens 9 , weiter bevorzugt mit wenigstens 12 Kohlenstoffatomen sowie Silikone verwendet.

Weiterhin ist bevorzugt, daß wenigstens ein organischer Ligand wenigstens eine funktionelle Gruppe aufweist, die mit optionalen Bestandteilen des Beschichtungsmittels reagieren kann. Dieser Ligand kann zusätzlich auch über die vorgenannten hydrophoben Eigenschaften verfügen. Somit kann es sich beispielsweise um eine Fettsäure mit einer reaktionsfähigen Gruppe bzw. Funktionalität handelt. Diese reaktionsfähige Gruppe bzw. Funktionalität kann mit Amino-funktionalisierten Silikonen umgesetzt werden, wodurch die Hydrophobizität des Liganden weiter verstärkt wird.

Gemäß einer bevorzugten Weiterbildung der Erfindung ist der Metallkomplex durch die folgende Schritte erhältlich:
(a) Neutralisieren einer Carboxylgruppen-haltigen Verbindung, die 3 bis 30 Kohlenstoffatome, vorzugsweise 9 bis 24 Kohlenstoffatome, aufweist, mit einer flüchtigen basischen Stickstoffverbindung, vorzugsweise Ammoniak und/oder einer flüchtigen Aminverbindung,
(b) Zugeben wenigstens eines wasserlöslichen Salzes eines Metalls, das aus der Gruppe, die aus B, Al, Si, Ge, Sn, Pb, Ti, Zr, V, Cr, Mo, Mn, Fe, Zn und Mischungen davon besteht, ausgewählt wird zu der Mischung aus Schritt (a),
(c) gegebenenfalls Zugeben einer flüchtigen basischen Stickstoffverbindung, vorzugsweise von Ammoniak und/oder einer flüchtigen Aminverbindung, zu der Mischung aus Schritt (b).

Im Schritt (a) kann als Carboxylgruppen-haltige Verbindung sowohl eine Mono-, Di- oder Polycarbonsäure als auch eine Mischung davon verwendet werden. Vorzugsweise wird eine Monocarbonsäure verwendet. Als geeignet haben sich auch Carboxylgruppe(n)-haltiges Wachs, Fettsäure oder Siliconharz mit Carboxylgruppe erwiesen. Die Carboxylgruppe bewirkt eine Koordination der Carboxylgruppe(n)-haltigen Verbindung am Metallkation und mithin eine Fixierung in dem Komplex und somit in der aufgebrachten Beschichtung.

Die verwendete Carboxylgruppe(n)-haltige Verbindung, vorzugsweise eine Monocarbonsäure, wird vorzugsweise mit Ammoniak oder einem flüchtigem Amin neutralisiert. Als flüchtiges Amin kann beispielsweise Aminomethylpropanol, Diethanolamin, Triethanolamin, etc. verwendet werden

Die in Schritt (a) hergestellte neutralisierte Mischung wird mit einem wasserlöslichen Metallsalz von B, Al, Si, Ge, Sn, Pb, Ti, Zr, V, Cr, Mo, Mn, Fe, Zn oder Mischungen davon in wässriger Umgebung gemischt, worauf ein Metallkomplex erhalten wird.

Es können dabei auch gemischte Metallkomplexe mit verschiedenen Kationen der vorgenannten Metalle hergestellt und bei der Herstellung des erfindungsgemäßen Beschichtungsmittels verwendet werden.

Vorzugsweise werden Komplexe mit Si, Al, Zr und/oder Ti als Zentralkationen verwendet. Beispielsweise kann Ammoniumzirkoniumcarbonat als lösliches Metallsalz verwendet werden.

Es können weiterhin die in dem Europäischen Patent 0 632 109 B1 offenbarten Kupplungsreagenzien, beispielsweise Zirkoniumaluminate, bei der Herstellung des erfindungsgemäßen Beschichtungsmittels verwendet werden. Diese Kupplungsreagenzien können nach EP 0 632 109 B1 unter der Bezeichnung MANCHEM^{®} bei MANCHEM LIMITED, Ashton New Road, Clayton, Manchester, M11 4AT, England, bezogen werden.

Des weiteren können auch die in dem Europäischen Patent 0 491 773 B1 beschriebenen Metallkomplex-Vernetzungsmittel bei der Herstellung des erfindungsgemäßen Beschichtungsmittels verwendet werden.

Ein besonders geeigneter, stark hydrophobierter Metallkomplex ist der HF-200 Komplex, erhältlich bei der Fa. Böhme AG, Bernische Lack- und Farbenfabrik, Stationsstraße 37, 3097 Liebefeld, Schweiz.

Der haftvermittelnde Metallkomplex bewirkt äußerst vorteilhaft sowohl eine Haftung zum Bindemittel, zu der Cellulose-haltigen Substratoberfläche als auch zur Oberfläche des plättchenförmigen Pigmentes, vorzugsweise Metallpigment, unter Ausbildung eines stabilen und beständigen Verbundes.

Der Mechanismus der überraschenden haftvermittelnden Wirkung des vorstehend beschriebenen Metallkomplexes ist noch nicht geklärt. Es wird vermutet, daß die Liganden des Metallkomplexes mit den Hydroxylgruppen der Cellulose in der Cellulose-haltigen Substratoberfläche umgesetzt werden. Es können bspw. Liganden des Metallkomplexes unter wässrigen Bedingungen hydrolysieren und zu am Zentralkation des Metallkomplexes koordinierten Hydroxylionen führen, die nachfolgend mit den Hydroxylgruppen der Cellulose kondensieren. Es ist aber auch möglich, Metallkomplexe zu verwenden, die bereits am Zentralkation koordinierte Hydroxylionen aufweisen. Diese am Zentralkation koordinierten Hydroxylionen können mit den Hydroxylionen der Cellulose unter Wasserabspaltung den Metallkomplex über eine Sauerstoffbrücke an die Cellulose binden. Auch können Metallkomplexe verwendet werden, bei denen die Hydroxylgruppe der Cellulose den Liganden aus dem Metallkomplex verdrängt. Der Metallkomplex kann auch über Wasserstoffbrückenbindungen an den Hydroxylgruppen der Cellulose gebunden werden.

Die plättchenförmigen Pigmente weisen aufgrund ihrer Beschaffenheit Hydroxylgruppen an der Oberfläche bzw. an der Oberfläche der korrosionsbeständigen Beschichtung auf, die, wie vorstehend für die Wechselwirkung oder Umsetzung mit den Hydroxylgruppen der Cellulose beschrieben, analog mit dem Metallkomplex reagieren oder wechselwirken.

Vorzugsweise sind die plättchenförmigen Pigmente, bevorzugt Metallpigmente, mit wenigstens einer korrosionsbeständigen Beschichtung beschichtet, die reaktive Gruppen aufweist. Selbstverständlich ist es auch möglich, die Oberfläche der plättchenförmigen Pigmente bzw. die Oberfläche von korrosionsbeständig beschichteten plättchenförmigen Pigmenten, beispielsweise von Silikatbeschichteten Metallpigmenten, mit reaktiven Orientierungsmitteln zu versehen, wie diese in der DE 198 20 112 beschrieben sind. Als Beispiele können OH-Gruppe, Silanolgruppe, Acrylatgruppe, Methacrylatgruppe, Aminogruppe, etc. angegeben werden.

Derartig beschichtete plättchenförmige Pigmente, vorzugsweise Metallpigmente, reagieren leicht mit dem Haftvermittler, vorzugsweise Metallkomplex und/oder einem funktionalisiertem Organosilan (siehe unten), in dem erfindungsgemäßen Beschichtungsmittel.

Gemäß einer weiteren Ausführungsform der Erfindung kann der Haftvermittler ein funktionalisiertes Organosilan RₙSiX₄₋ₙ sein, wobei n = 0 bis 2 ist und R für einen substituierten oder nichtsubstituierten organischen Rest, vorzugsweise Alkyl, Aryl, Alkylaryl oder Arylalkyl, und X für funktionelle Gruppen und/oder für substituierte oder nichtsubstituierte organische Reste steht, die mit Hydroxylgruppen Komplexe bilden und/oder mit Hydroxylgruppen unter Ausbildung einer kovalenten Bindung reagieren und/oder durch Hydroxylgruppen unter Ausbildung einer Sauerstoff-Silicium-Bindung aus dem Organosilan verdrängt werden. Vorzugsweise wird ein Gemisch aus verschiedenen funktionalisierten Organosilanen verwendet.

Weiterhin ist bevorzugt, dass in dem Beschichtungsmittel als Haftvermittler ein Metallkomplex und ein funktionalisiertes Organosilan enthalten ist.

Es hat sich gezeigt, daß die Verwendung von Metallkomplex und funktionalisiertem Organosilan zu einer weiteren Verbesserung der physikalischen Eigenschaften führt.

Das erfindungsgemäße Beschichtungsmittel kann sowohl auf wäßriger Basis, gegebenenfalls unter Zusatz von organischem Lösungsmittel, wie auch auf rein lösungsmittelhaltiger Basis aufgebaut werden. Besonders bevorzugt sind jedoch aus ökologischen Gründen wäßrige Systeme, die vorzugsweise im wesentlichen aus Wasser bestehen und nur geringfügige Mengen an organischem Lösungsmittel enthalten.

Bei einer bevorzugten erfindungsgemäßen Weiterbildung werden Metallkomplexe mit Silicium-, Titan-, Zirkonium- und Aluminiumkationen als Zentralkationen verwendet. Es zeigte sich überraschenderweise, dass Metallkomplexe mit diesen Metallkationen eine besonders deutliche Verbesserung in Schnellbewittterungstests ergeben. Diese Metallkomplexe sind besonders gut geeignet, durch Reaktion mit den Hydroxylgruppen der Cellulose eine gute Haftung an der Substratoberfläche zu bewirken, an Funktionalitäten auf der Pigmentoberfläche anzubinden und gegebenenfalls mit den Bindemitteln in dem Beschichtungsmittel zu reagieren.

Auf diese Weise wird ein ausgezeichneter Haftverbund zwischen allen Komponenten der Beschichtung erreicht. Insbesondere werden die plättchenförmigen Pigmente, vorzugsweise Metallpigmente, in der Beschichtung zuverlässig verankert. Dies ist insbesondere von Vorteil, wenn über den Metallpigmenten liegendes Bindemittel mit der Zeit unter UV- und Feuchtigkeitseinwirkung abgebaut werden sollte.

Ein weiterer Effekt dieser Metallkomplexe ist eine zusätzliche Hydrophobierung der Beschichtung. Die Hydrophobierung wird weiter verbessert, wenn der Metallkomplex einen Liganden mit einem langkettigen verzweigten oder unverzweigten Alkylrest aufweist. Beispielsweise kann der Ligand eine Monocarbonsäure mit 9 oder mehr Kohlenstoffatomen sein wie z. B. mit 16 (Palmitinsäure) oder 18 Kohlenstoffatomen (Stearinsäure). Derartige Fettsäuren werden in durch Amine neutralisierter Form schon seit langem in Holzschutzbeschichtungen zur Hydrophobierung eingesetzt. Nachteilig hierbei ist bislang, daß diese Salze unter dem Einfluß von Wasser auf die Beschichtung mit der Zeit ausgewaschen werden können. Damit läßt die hydrophobierende Wirkung der Beschichtung mit der Zeit nach und Korrosionsprozesse setzen vermehrt ein.

Durch Komplexierung der vorzugsweise verwendeten Fettsäure über die Carboxylgruppe an dem Metallkation ist die Fettsäure in der Beschichtung fixiert und hydrophobiert zuverlässig die Substratoberfläche.

Bei einer weiteren erfindungsgemäßen Ausführungsform können die hydrophoben Eigenschaften der Metallkomplexe durch Umsatz von einem oder mehreren Liganden mit geeignet funktionalisierten Siliconölen oder -harzen verbessert werden. Bei den funktionalisierten Siliconölen handelt es sich beispielsweise um aminofunktionelle Siliconöle, Siliconharze oder carboxylfunktionelle Wachse.

Beispiele derartiger Silikonöle und Wachse sind: Dow-Corning^{®} 2-9034 (nichtionogene Organosilikon-Emulsion), Baysilone^{®} (erhältlich bei Bayer AG, Leverkusen, Deutschland), Crodasil-Reihe (erhältlich bei Croda Resins Ltd.), Silikophen-Reihe (erhältlich bei Tego, Essen, Deutschland), Ceridust, Licowax (erhältlich bei Clariant GmbH, Deutschland).

Unter Bindemittel, die in dem Beschichtungsmittel enthalten sind, werden herkömmliche Bindemittel, die mit bestimmten funktionellen Gruppen ausgestattet sind, verstanden. Dabei kann es sich beispielsweise um Monomerfunktionalitäten, wie beispielsweise Methacrylat- oder Acrylatgruppen, handeln. Geeignet sind weiterhin Bindemittel, welche über eine oder mehrere freie Carboxylgruppen und/oder Hydroxylgruppen und/oder Aminogruppen verfügen und mithin eine Umsetzung mit dem Metallkomplex und/oder dem funktionalisierten Organosilan ermöglichen.

Vorzugsweise können die funktionellen Gruppen des Bindemittels mit der vorzugsweise funktionalisierten Oberfläche der Pigmente und/oder mit den Metallkomplexen unter Ausbildung von chemische Bindungen umgesetzt werden. Unter einer chemischen Bindung wird erfindungsgemäß eine kovalente Bindung, Ionenbindungen, Wasserstoffbrückenbindung oder Komplexbildung verstanden.

Des weiteren können auch die in der WO 93/08006 beschriebenen organofunktionellen Silane als Bindemittel verwendet werden.

Der Bindemittelanteil der Beschichtungszusammensetzung sollte nicht zu hoch gewählt werden, da andernfalls die Dampfdurchlässigkeit der Beschichtungen leiden könnte.

Eine gute Dampfdurchlässigkeit ist wichtig für lange Bewitterungszeiten, da andernfalls Beschichtungen durch unterwanderndes Wasser abplatzen können. Das Bindemittel ist vorzugsweise in Anteilen von 10 bis 20 Gew.-%, bezogen auf das Gesamtgewicht des Beschichtungsmittels, in dem Beschichtungsmittel enthalten.

Es können Bindemittel sowohl für wäßrige als auch für lösemittelhaltige Dispersionen verwendet werden. Besonders bevorzugt sind jedoch Bindemittel für wäßrige Systeme.

Beispiele derartiger Bindemittel sind: Mowilith LDM Holzlasuren (Acrylatsystem erhältlich bei Clariant GmbH, Division CP, Am Unionspark 1, D-65843 Sulzbach am Taunus, Deutschland), Primal AC 337 (Acrylat Dispersion erhältlich bei Rohm & Haas, In der Kron 4, D-60489 Frankfurt, Deutschland) oder Necowel 6262, Necowel 2275, Necowel 2329 oder Necowel 5088 AMP (Polyurethan modifizierte Alkydharzdispersion; erhältlich bei Ashland-Südchemie-Kernfest GmbH, Hildenstr. 16-18, Postfach 440, D-40721 Hilden, Deutschland).

Das Beschichtungsmittel weist vorzugsweise einen Feststoffgehalt von 10 bis 35 Gew.-%, vorzugsweise bei 15 bis 30 Gew.-%, bezogen auf das Gesamtgewicht des Beschichtungsmittels, auf.

Der Gehalt an Metallpigment in dem Beschichtungsmittel liegt bei 2 bis 20 Gew.-%, vorzugsweise bei 4 bis 16 Gew.-%, bezogen auf das Gesamtgewicht des Beschichtungsmittels.

Vorzugsweise ist das Verhältnis von plättchenfömigen Pigmenten zu Bindemittel relativ hoch und liegt vorzugsweise in einem Bereich von 1:5 bis 1:1, bezogen auf die jeweiligen Gewichtsanteile.

Gemäß einer weiteren bevorzugten Ausführungsform kann das Beschichtungsmittel Zusatzstoffe, wie beispielsweise Fungizide, Verdicker, Entschäumer, Hilfslösemittel, Antiabsetzmittel, weitere Hilfsbindemittel, etc., enthalten. Art und Menge dieser zugesetzten optional verwendeten Zusatzstoffe entsprechen dabei dem Stand der Technik.

Zusätzlich können auch noch Insektizide und/oder Algizide zugegeben werden.

Das erfindungsgemäße Beschichtungsmittel ist vorteilhaft ein 1 K-System (Einkomponentensystem), daß nach Applikation ohne Zugabe einer weiteren Komponente aushärtet. Die Aushärtung erfolgt nach Verflüchtigung inhibierender Zusatzstoffe wie beispielsweise Ammoniak oder flüchtige Amine. Der grundsätzliche Aufbau von 1 K-Systemen ist dem Fachmann bekannt.

Bei dem Cellulose enthaltenem Substrat handelt es sich vor allem um Holz oder holzartige Fasern. Die OH-Funktionen der Cellulose können dabei mit OH-Funktionen des Metallkomplexes unter Kondensation reagieren und stabile Bindungen ausbilden.

Die erfindungsgemäße Beschichtungszusammensetzung findet Verwendung als bewitterungsstabile Grundierung für die Beschichtung von Holz oder holzartigen Fasern. Die Erfindung betrifft mithin auch unter Verwendung des erfindungsgemäßen Beschichtungsmittels hergestellte beschichtete Substrate und Substratoberflächen, wie beispielsweise beschichtete Holzplatten, Holzpfosten, beschichtete Baumaterialien aus Holz, etc..

Äußerst vorteilhaft ist die Schichtdicke einer auf eine Substratoberfläche aufgebrachten erfindungsgemäßen Beschichtung mit etwa 10 µm bis 50 µm, vorzugsweise 20 µm bis 45 µm, weiter bevorzugt von 30 µm bis 45 µm, sehr dünn. Im Stand der Technik weisen deckende Beschichtungen eine Schichtdicke von 100 µm und mehr auf, die teuer sind und leicht abplatzen. Das erfindungsgemäße Beschichtungsmittel erlaubt vorteilhaft eine starke Einsparung an Beschichtungsmaterial.

Die Erfindung wird nachfolgend anhand einiger Beispiele weiter erläutert.

### Beispiele

### Beispiel 1

### Herstellung eines Metallkomplexes zur Verwendung in dem erfindungsgemäßen Beschichtungsmittel

2 g Montanwachssäure (erhältlich bei Fa. Clariant GmbH, Deutschland (s.o.)) und 0,6 g Silikonharzemulsion mit der Bezeichnung Silikophen P40/W (erhältlich bei Fa. Tego, Essen, Deutschland) werden unter Rühren zu 94 g Wasser gegeben. Die erhaltene Suspension wird auf 70°C bis 75°C erwärmt. Zu der erwärmten Suspension wird eine äquimolare Menge an 2-Amino-2-methylpropan-1-ol unter Rühren mit 2000 Upm hinzugefügt und das Reaktionsgemisch neutralisiert. Dann wird ein kleiner Überschuß Ammoniak zugegeben. Nachfolgend wird das Reaktionsgemisch auf 30°C abgekühlt, und es werden 3,4 g Ammoniumzirkoniumcarbonat unter vorsichtigem Rühren hinzugefügt. Nach ca. 1 h ist die Komplexbildung beendet. Der hergestellte Komplex kann ohne weitere Aufarbeitung in dem erfindungsgemäßen Beschichtungsmittel verwendet werden.

### Beispiel 2

### Herstellung eines erfindungsgemäßen Beschichtungsmittels

400 g HF-200 (Metallkomplex), 200 g HF 2253 (Antiabsetzmittel) (HF-200 und HF 2253 sind beide bei der Fa. Böhme AG, Schweiz (s.o.) erhältlich) werden unter intensivem Rühren mit 225 g Necowel 5088 (erhältlich bei Fa. Ashland-Südchemie-Kernfest GmbH, Deutschland (s.o.)) und 150 g Mowilith LDM 7416 (erhältlich bei Fa. Clariant GmbH (s.o.)) vermengt. Durch Zugabe von 250 g Wasser wird eine Viskosität von 19 bis 20 Sekunden im DIN 4 Auslaufbecher eingestellt. Zu diesem Gemisch werden unter Rühren 100 g Stapa^{®} IL Hydrolan 212 VP 54666/G (erhältlich bei Fa. Eckart GmbH & Co. KG, D-91235 Velden, Deutschland: eine Paste mit Aluminiumpigmenten, die mit ca. 5 Gew.-% SiO₂ x nH₂O beschichtet sind) unter Rühren hinzugefügt. Das so hergestellte erfindungsgemäße Beschichtungsmittel kann direkt zum Beschichten verwendet werden.

### Beispiel 3

### Künstliche Bewitterungsprüfung von beschichteten Proben

Fichtenholz-Probenbrettchen (21 x 9 cm) wurden, wie in Tabelle 1 angegeben, mittels Pinselauftrag beschichtet. Dabei wurden zunächst eine oder zwei Grundierungsschichten (G) und nachfolgend ein oder zwei Deckschichten (D) aufgebracht, wie in der Spalte "Beschichtungsaufbau" angegeben. Es wurden jeweils insgesamt 3 Schichten aufgetragen. Nach Auftrag der jeweiligen Grundierung ließ man die Beschichtung für 24 Stunden bei Zimmertemperatur trocknen. Nachfolgend wurden die Deckschichten aufgetragen.

**Tabelle 1**

| **Proben-Nr.** | **Beschichtungsaufbau** | **Schichtdicke (µm)** |
|---|---|---|
| 1 | G: 1 x Lignol WAB | |
| | D: 2 x Perl-Color Beizlasur PC-9, walnuß | 17 |
| 2 | G: 1 x Lignol WAB | |
| | D: 2 x Satin-Color Dickschichtlasur SC-9, walnuß | 15 |
| 3 | G: 1 x Lignol WAB | |
| | D: 2 x Perl-Color + 10 % Stapa^{®} IL Hydrolan 212 | 17 |
| 4 | G: 1 x Perl-Color, grau | |
| | D: 2 x Perl-Color, grau | 15 |
| 5 | G: 1 x ASS-Grund, weiß | |
| | D: 2 x Satin-Color FF-5000, Fensterfarbe RAL 9010 | 114 |
| 6 | G: 2 x Perl-Color PC-9, walnuß | |
| | D: 1 x Aqua-Stop satin | 29 |
| 7 | G: 2 x Perl-Color + 10 % Stapa^{®} IL Hydrolan 212 | |
| | D: 1 x Aqua-Stop satin | 42 |
| 8 | G: 2 x Perl-Color + 10 % Stapa^{®} IL Hydrolan 212 | |
| | D: 1 x Aqua-Stop matt | 21 |
| 9 | G: 1 x Perl-Color + 10 % Stapa^{®} IL Hydrolan 212 | |
| | D: 2 x Perl-Color + 10 % Stapa^{®} IL Hydrolan 212 | 28 |
| 10 | G: 1 x Perl-Color Beizlasur PC-9, walnuß | |
| | D: 2 x Perl-Color Beizlasur PC-9, walnuß | 16 |

Die Beschichtungsmittel Lignol WAB, Aqua-Stop satin, Aqua-Stop matt, Perl-Color grau, Perl-Color Beizlasur PC-9 walnuß, Satin-Color Dickschichtlasur SC-9 walnuß, ASS-Grund weiß, Satin-Color FF-5000 Fensterfarbe RAL 9010 sind bei der Firma Böhme AG, Schweiz (s.o.) erhältlich und enthalten keine plättchenförmigen Pigmente.

Das Lacksystem Perl-Color ist bei der Fa. Böhme AG, Schweiz (s.o.) erhältlich. Zu diesem Lacksystem wurden plättchenförmige Aluminiumpigmente (Stapa^{®} IL Hydrolan 212 VP 54666/G (Größe der Pigmentplättchen: 60 µm), erhältlich bei Fa.

Eckart GmbH & Co KG (s.o)) hinzugefügt. Im Folgenden wird diese Mischung als Perl-Color + 10 % Stapa^{®} Hydrolan 212 bezeichnet. Der Anteil an Stapa^{®} IL Hydrolan 212 in der Mischung Perl-Color betrug 10 Gew.-% einer Paste mit 65 Gew.-% Feststoffgehalt und 35 Gew.-% Isopropanol. Das Aluminiumpigment besteht aus etwa 95 Gew.-% Aluminium und 5 Gew.-% SiO₂ x nH₂O. Die Endkonzentration an Aluminiumpigment in der Perl-Color + 10 % Stapa^{®} Hydrolan 212 beträgt ca. 6 Gew.-%.

Die vorgenannten Beschichtungsmittel 1 bis 10 enthalten jeweils den Metallkomplex HF-200 (erhältlich bei der Firma Böhme AG, Schweiz (s.o.)) in einer Menge von 40 Gew.-%.

Die Probenbrettchen wurden einer Schnellbewitterung in Anlehnung an ENISO 11507 mit einem QUV-Gerät unterzogen. Die Versuche wurden von der Eidgenössischen Materialprüfungs- und Forschungsanstalt (EMPA), Überlandstr. 129, 8600 Dübendorf/Schweiz, durchgeführt. Das QUV-Gerät wurde von der Fa. Q-Panel Corporation in Cleveland, Ohio/USA bezogen und für die Untersuchung von Holzproben modifiziert, wie in J. Sell und K. Weiss, Apparat für die künstliche Bewitterung von Holz und Holzanstrichen, farbe + lack, 6/1989, Seiten 417 - 418, beschrieben. Dabei wurden die Probenbrettchen zunächst für eine Woche bei 23°C und 50 % relativer Luftfeuchtigkeit konditioniert. Anschließend wurden die Probenbrettchen für 2400 h mit folgendem Wochenzyklus in einem QUV-Gerät bewittert:
- 24 h betauen bei 45°C
- 6 Tage:
   abwechselnd:
      - 2,5 h UV-Bestrahlung bei 60°C
      - 0,5 h Beregnen

Das Ergebnis der künstlichen Bewitterung ist in Tabelle 2 wiedergegeben. Die Beurteilung erfolgte visuell, wobei die bewitterten Proben mit einem unbewittertem Standard verglichen wurden. Es wurde folgender Bewertungsmaßstab verwendet:
0: keine sichtbare Änderung
1: schwach sichtbare Änderung
2: deutlich sichtbare Änderung
3: stark sichtbare Änderung
4: sehr stark sichtbare Änderung
5: sichtbare Änderung auf der gesamten Probenfläche

**Tabelle 2: Ergebnis der Schnellbewitterung**

| **Proben-Nr.** | **Glanzverlust** | **Haftungsverlust** | **Kreidung** |
|---|---|---|---|
| 1 | 2-3 | 2-3 | 0-1 |
| 2 | 1-2 | 0-1 | 0-1 |
| 3 | 0 | 0 | 0 |
| 4 | 3-4 | 0 | 1-2 |
| 5 | 1-2 | 0 | 0-1 |
| 6 | 3-4 | 2-3 | 0-1 |
| 7 | 0-1 | 0 | 0* |
| 8 | 0-1 | 0 | 0* |
| 9 | 0 | 0 | 0 |
| 10 | 1-2 | 0 | 0-1 |

| | | | |
|---|---|---|---|
| * die Proben Nr. 7.und 8 waren etwas bleicher als die Probe Nr. 9 | | | |

Die mit Aluminiumpigmenten beschichteten Proben (Proben Nr. 3, 7, 8 und 9) erwiesen sich als besonders beständig und zeigten das beste Ergebnis. Überraschenderweise zeigten die Proben Nr. 3 und 9, die über der Aluminiumhaltigen Beschichtung keine weitere Deckschicht ohne Aluminiumpigment aufwiesen, die besten Ergebnisse. Der Erhalt des Glanzes zeigt, daß es zu keiner Oxidation der Aluminiumpigmente kam. Des weiteren kam es bei keiner der Proben Nr. 3, 7, 8 und 9 zu einem Haftungsverlust in Form von visuell sichtbaren Abplatzungen oder Ablösungen.

Zusammenfassend ist festzustellen, daß die Beschichtungsmittel, die plättchenförmige Pigmente enthalten, eine deutliche Verbesserung der Bewitterungsstabilität gegenüber den Vergleichsproben zeigten.

### Beispiel 4

### Freibewitterung von beschichteten Holzplättchen

Es wurden folgende Beschichtungsmittel (A) bis (E) verwendet:
(A): Perl-Color + 10 % Stapa^{®} Hydrolan 212 (Teilchengröße 60 µm), gleiche Zusammensetzung wie in Beispiel 3 oben
(B): Perl-Color+ 10 % Stapa^{®} Hydrolan 212(Teilchengröße 60 µm), Zusammensetzung wie bei Probe (B), jedoch ohne Metallkomplex HF 200
(C) Perl-Color + 10 % Stapa^{®} Roto Vario Aqua 610012 (Teilchengröße 18 µm, es handelt sich um ein Aluminiumpigment, welches lediglich durch organische Additive eingeschränkt gegenüber Korrosion stabilisiert ist, jedoch keine korrosionsbeständige Beschichtung aufweist. Das Aluminiumpigment Roto Vario Aqua 610012 wird üblicherweise in Druckfarben verwendet)
(D) Lasurfarbe aus Perl-Color mit 4 Gew.-% deckenden TiO₂-Pigmenten TRONOX CR-800 (erhältlich von Firma Kerr McGEE) und 2 Gew.-% mikronisierten transparenten TiO₂-Pigmenten Hombitec RM 400 WP (erhältlich von Firma Sachtleben (s.o.)) (Bei den TiO₂-Pigmenten handelt es sich um unförmig bis kugelförmige Pigmente, nicht jedoch um plättchenförmige Pigmente)
(E) Lasurfarbe aus Perl-Color mit 4 Gew.-% deckenden Eisenoxidgelb-Pigmente COLANYL-Oxidgelb R 131 (erhältlich von Clariant GmbH (s.o.)) und 4 Gew.-% mikronisierten transparenten Eisenoxidgelb-Pigmente Napronyl-Tr. Oxidyellow L 8020 (erhältlich von Clariant GmbH (s.o.)) (Bei den Eisenoxidgelb-Pigmenten handelt es sich um unförmig bis kugelförmige Pigmente, nicht jedoch um plättchenförmige Pigmente)

Die Beschichtungsmittel (A) bis (E) wurden hergestellt, indem die angegebenen Pigmente in den angegebenen Mengen in das Lacksystem Perl-Color eingebracht wurden. Mit Ausnahme des Beschichtungsmittels (B) enthielt das Perl-Color jeweils den Metallkomplex HF 200.

Mit den vorgenannten Beschichtungsmitteln wurden Fichtenholz-Probenbrettchen unter identischen Bedingungen beschichtet. Die beschichteten Probenbrettchen wurden gegenüber einer Freibewitterung für mehrere Jahre ausgesetzt.

Freibewitterungsbedingungen:
Standort: Bern-Liebefeld, Schweiz
Wohngebiet ohne Großindustrie
45° Winkel, Richtung Südwest
keine Norm

Die Ergebnisse sind in Tabelle 3 dargestellt, wobei die Bewertung visuell unter Verwendung des in bezug auf Tabelle 2 angegebenen Bewertungsmaßstabes erfolgte.

**Tabelle 3**

| **Proben-Nr.** | **Dauer** | **Glanzverlust** | **Haftungsverlust** | **Kreidung** |
|---|---|---|---|---|
| (A) | 4 Jahre | 0 | 0 | 0 |
| (B) | 2 Jahre* | 0 | 2-3 | 0 |
| (C) | 2 Jahre* | 2 | 1 | 0-1 |
| (D) | 2 Jahre* | 3 | 3 | 3 |
| | 4 Jahre* | 3-4 | 3-4 | 3-4 |
| (E) | 2 Jahre* | 2-3 | 2-3 | 2 |

| | | | | |
|---|---|---|---|---|
| *die Proben wurden nach den angegebenen Jahren aus dem Wetterstand genommen | | | | |

Ein Teil der mit dem Beschichtungsmittel (D) beschichteten Probenbrettchen wurde nach zwei Jahren aus dem Wetterstand genommen. Ein weiterer Teil der mit dem Beschichtungsmittel (D) beschichteten Probenbrettchen wurde nach vier Jahren aus dem Wetterstand genommen.

Die in Tabelle 3 dargestellten Ergebnisse stehen in Übereinstimmung mit den in Beispiel 3 bei der Schnellbewitterung erhaltenen Ergebnissen. Das Beschichtungsmittel (A) war den zu Vergleichszwecken weiter verwendeten Beschichtungsmitteln (B) bis (E) deutlich überlegen.

Aus dem direkten Vergleich der Beschichtungsmittel (A) und (B) ist zu sehen, daß die Verwendung des Metallkomplexes HF 200 eine sehr starke Verbesserung in bezug auf die Haftung der aufgebrachten Beschichtung hat.

Das Ergebnis des verwendeten Beschichtungsmittel (C) zeigt, daß die Verwendung von korrosionsbeständigen Pigmenten von sehr großer Bedeutung ist. Im Falle des Beschichtungsmittels (C) trat bereits nach zwei Jahren durch Korrosion ein starker Glanzverlust ein. Die in dem Beschichtungsmittel (A) verwendeten Aluminiumpigmente sind im Unterschied zu den im Beschichtungsmittel (C) verwendeten Aluminiumpigmenten mit einer korrosionsbeständigen Silikatbeschichtung vollständig beschichtet.

Die Ergebnisse der verwendeten Beschichtungsmittel (D) und (E) zeigen, daß die Verwendung von plättchenförmigen Pigmenten von sehr großer Bedeutung ist. Im Falle der Beschichtungsmittel (D) und (E) wurden bei sämtlichen Bewertungspunkten sehr schlechte Ergebnisse erhalten.

Darüber hinaus wurde festgestellt, daß die mit dem erfindungsgemäßen Beschichtungsmittel (A) beschichteten Holzbrettchen eine überraschend geringe Verschmutzung der Oberfläche aufwiesen. Die unter Verwendung des erfindungsgemäßen Beschichtungsmittels (A) hergestellten Beschichtungen besitzen mithin eine Selbstreinigungswirkung.

Somit eignet sich das erfindungsgemäße Beschichtungsmittel auch zur Herstellung von Substratoberflächen mit einer schmutzabweisenden Oberfläche bzw. von Oberflächen mit einem Selbstreinigungseffekt.

Aufgrund der zuverlässigen Haftung des erfindungsgemäßen Beschichtungsmittels an Cellulose-haltigen Oberflächen und der langjährigen Beständigkeit der hergestellten Beschichtung wird ein äußerst effektiver UV-Schutz bereitgestellt.

## Patentansprüche

1. Beschichtungsmittel für Cellulose-haltige Substratoberflächen mit einer Flüssigphase und Bindemittel,
**dadurch gekennzeichnet,**
**daß** das Beschichtungsmittel plättchenförmige Pigmente und einen Haftvermittler umfasst, wobei die plättchenförmigen Pigmente korrosionsbeständig und für UV-Licht undurchlässig sind und wobei der Haftvermittler eine Bindung zwischen plättchenförmigen Pigmenten, Bindemittel und der Cellulose-haltigen Substratoberfläche bewirkt.

2. Beschichtungsmittel nach Anspruch 1,
**dadurch gekennzeichnet,**
**daß** die plättchenförmigen Pigmente Metallpigmente mit einer korrosionsbeständigen Beschichtung sind.

3. Beschichtungsmittel nach Anspruch 2,
**dadurch gekennzeichnet,**
**daß** die korrosionsbeständige Beschichtung aus der Gruppe ausgewählt wird, die aus Aluminiumoxidschicht, Silikatschicht, Chromoxid-haltige Schicht, Acrylatschicht und übereinander angeordneten Schichten davon besteht.

4. Beschichtungsmittel nach Anspruch 2 oder 3,
**dadurch gekennzeichnet,**
**daß** die Metallpigmente aus Metallen und/oder Metallegierungen, die aus der Gruppe, die aus Aluminium, Zink, Zinn, Kupfer, Eisen, Titan, Stahl, und Legierungen davon, vorzugsweise Goldbronze, besteht, ausgewählt werden, hergestellt sind.

5. Beschichtungsmittel nach Anspruch 4,
**dadurch gekennzeichnet,**
**daß** die Metallpigmente Silikat-beschichtete Aluminium-, Zink-, Zinn-, Kupfer-, Eisen-, Titan-, Stahl-, Goldbronzepigmente sind.

6. Beschichtungsmittel nach einem der vorhergehenden Ansprüche, **dadurch gekennzeichnet,**
**dass** auf der korrosionsstabilen Beschichtung der Pigmente funktionalisierte Silan-Oberflächenmodifizierungsmittel aufgebracht sind.

7. Beschichtungsmittel nach einem der Ansprüche 3 bis 6,
**dadurch gekennzeichnet,**
**dass** in die korrosionsstabile Beschichtung, vorzugsweise eine Silikatschicht, zusätzlich Farbpigmente eingelagert sind.

8. Beschichtungsmittel nach einem der vorhergehenden Ansprüche,
**dadurch gekennzeichnet,**
**dass** die korrosionsbeständigen plättchenförmigen Pigmente, vorzugsweise korrosionsstabile Metallpigmente, im wesentlich kreisförmig oder oval sind und einen maximalen Durchmesser von 1 bis 250 µm, vorzugsweise von 5 µm bis 70 µm, aufweisen.

9. Beschichtungsmittel nach einem der vorhergehenden Ansprüche,
**dadurch gekennzeichnet,**
**daß** der Haftvermittler ein Metallkomplex mit einem oder mehreren organischen Liganden ist, wobei der Metallkomplex als Zentralion(en) ein oder mehrere Metallkation(en) enthält, die aus der Gruppe, die aus B, Al, Si, Ge, Sn, Pb, Ti, Zr, V, Cr, Mo, Mn, Fe, Zn und Mischungen davon besteht, ausgewählt werden und der Metallkomplex wenigstens zwei funktionelle Gruppen oder Liganden aufweist, die mit Hydroxylgruppen einen Komplex bilden oder eine kovalente Bindung ausbilden oder durch Hydroxylgruppen unter Ausbildung einer Sauerstoff-Zentralkation-Bindung aus dem Komplex verdrängt werden.

10. Beschichtungsmittel nach Anspruch 9,
**dadurch gekennzeichnet,**
**daß** an dem einen Metallkation oder den mehreren Metallkationen des Metallkomplexes wenigstens zwei hydrolysierbare anorganische oder organische Liganden oder zwei Hydroxylionen koordiniert sind.

11. Beschichtungsmittel nach Anspruch 9 oder 10,
**dadurch gekennzeichnet,**
**daß** wenigstens ein organischer Ligand an dem einen Metallkation oder den mehreren Metallkationen des Metallkomplexes über eine Carboxylgruppe oder mehrere Carboxylgruppen koordiniert ist.

12. Beschichtungsmittel nach einem der vorhergehenden Ansprüche 9 bis 11,
**dadurch gekennzeichnet,**
**daß** wenigstens ein organischer Ligand hydrophob ist.

13. Beschichtungsmittel nach einem der vorhergehenden Ansprüche 9 bis 12,
**dadurch gekennzeichnet,**
**daß** wenigstens ein organischer Ligand wenigstens eine funktionelle Gruppe aufweist, die mit optionalen Bestandteilen des Beschichtungsmittels reagieren kann.

14. Beschichtungsmittel nach einem der vorhergehenden Ansprüche 9 bis 13,
**dadurch gekennzeichnet,**
**dass** der Metallkomplex durch die folgenden Schritte erhältlich ist:
(a) Neutralisieren einer Carbonsäure, die 3 bis 30 Kohlenstoffatome aufweist, mit einer flüchtigen basischen Stickstoffverbindung, vorzugsweise Ammoniak und/oder einer flüchtigen Aminverbindung,
(b) Zugeben wenigstens eines wasserlöslichen Salzes eines Metalls, das aus der Gruppe, die aus B, Al, Si, Ge, Sn, Pb, Ti, Zr, V, Cr, Mo, Mn, Fe, Zn und Mischungen davon besteht, ausgewählt wird zu der Mischung aus Schritt (a),
(c) gegebenenfalls Zugeben einer flüchtigen basischen Stickstoffverbindung, vorzugsweise von Ammoniak und/oder einer flüchtigen Aminverbindung, zu der Mischung aus Schritt (b).

15. Beschichtungsmittel nach einem der Ansprüche 1 bis 8,
**dadurch gekennzeichnet,**
**daß** der Haftvermittler ein funktionalisiertes Organosilan RₙSiX₄₋ₙ ist, wobei n = 0 bis 2 ist und R für einen substituierten oder nichtsubstituierten organischen Rest, vorzugsweise Alkyl, Aryl, Alkylaryl oder Arylalkyl, und X für funktionelle Gruppen und/oder für substituierte oder nichtsubstituierte organische Reste steht, die mit Hydroxylgruppen Komplexe bilden und/oder mit Hydroxylgruppen unter Ausbildung einer kovalenten Bindung reagieren und/oder durch Hydroxylgruppen unter Ausbildung einer Sauerstoff-Silicium-Bindung aus dem Organosilan verdrängt werden.

16. Beschichtungsmittel nach einem der Ansprüche 1 bis 8,
**dadurch gekennzeichnet,**
**dass** in dem Beschichtungsmittel als Haftvermittler ein Metallkomplex nach einem der Ansprüche 9 bis 14 und ein funktionalisiertes Silan nach Anspruch 15 enthalten ist.

17. Beschichtungsmittel nach einem der Ansprüche 1 bis 16,
**dadurch gekennzeichnet,**
**daß** die Flüssigphase aus der Gruppe ausgewählt wird, die aus Wasser, wäßriger Phase, organischem Lösungsmittel oder Mischungen davon, vorzugsweise Mischungen, die im wesentlichen aus Wasser bestehen, besteht.

18. Beschichtungsmittel nach Anspruch 13,
**dadurch gekennzeichnet,**
**dass** der wenigstens eine Ligand mit der wenigstens einen funktionellen Gruppe mit aminofunktionellem Siliconöl, Siliconharz oder carboxylfunktionellem Wachs umgesetzt ist.

19. Beschichtungsmittel gemäss einem der vorhergehenden Ansprüche,
**dadurch gekennzeichnet,**
**dass** das Beschichtungsmittel zusätzlich reaktives Bindemittel mit wenigstens einer freien Carboxylgruppe, Hydroxylgruppe und/oder Aminogruppe enthält.

20. Beschichtungsmittel nach einem der vorhergehenden Ansprüchen,
**dadurch gekennzeichnet,**
**dass** in dem Beschichtungsmittel etwa 2 bis etwa 20 Gew.-% korrosionsbeständige Pigmente, vorzugsweise etwa 4 bis 16 etwa Gew.%, bezogen auf das Gesamtgewicht des Beschichtungsmittels, enthalten sind.

21. Beschichtungsmittel nach einem der vorhergehenden Ansprüche,
**dadurch gekennzeichnet,**
**dass** in dem Beschichtungsmittel etwa 10 Gew.-% bis 20 Gew.-% Bindemittel, bezogen auf das Gesamtgewicht des Beschichtungsmittels, enthalten sind.

22. Beschichtungsmittel nach einem der vorhergehenden Ansprüche,
**dadurch gekennzeichnet,**
**dass** der Gesamtfeststoffgehalt in dem Beschichtungsmittel etwa 10 bis 35 Gew.-%, vorzugsweise etwa 15 bis 30 Gew.-%, bezogen auf das Gesamtgewicht des Beschichtungsmittels, beträgt.

23. Beschichtungsmittel nach einem der vorhergehenden Ansprüche,
**dadurch gekennzeichnet,**
**dass** das Beschichtungsmittel weiterhin Zusatzstoffe, wie Fungizide, Insektizide, Ablgizide, Verdicker, Entschäumer, Antiabsetzmittel, Hilfsbindemittel und/oder Hilfslösemittel, umfasst.

24. Beschichtungsmittel nach einem der vorhergehenden Ansprüche,
**dadurch gekennzeichnet,**
**dass** die Cellulose-haltige Substratoberfläche Holz, Holzspäne enthaltende Materialien, Papier und/oder Papier-haltige Materialien enthält.

25. Verwendung eines Beschichtungsmittels nach einem der Ansprüche 1 bis 24 zur Beschichtung von Cellulose-haltigen Subtratoberflächen, vorzugsweise von Holz, Holzspäne enthaltenden Materialien, insbesondere von Baumaterialien, oder Papier oder Papier-haltigen Materialien.

26. Verwendung eines Beschichtungsmittels gemäß Anspruch 25 zur Grundierung von Cellulose-haltigen Subtratoberflächen zur Herstellung von bewitterungsstabilen Bauelementen und Fassadenverkleidungen.

27. Cellulose-haltige Substratoberfläche,
**dadurch gekennzeichnet,**
**daß** die Substratoberfläche mit einem Beschichtungsmittel nach einem der Ansprüche 1 bis 24 beschichtet ist.

28. Cellulose-haltige Substratoberfläche nach Anspruch 27,
**dadurch gekennzeichnet,**
**daß** die Substratoberfläche die Oberfläche von Holzmaterial, Holz-haltigem Material, Papier, Papier-haltigem Material oder von chemisch und/oder physikalisch modifiziertem Holzmaterial ist.

## Claims

1. Coating agent for cellulose-containing substrate surfaces, comprising a liquid phase and binding agent, **characterized in that** the coating agent includes platelet-shaped pigments and a bonding agent, where the platelet-shaped pigments are corrosion-resistant and impermeable to UV light and where the bonding agent produces a bond between platelet-shaped pigments, binding agent and the cellulose-containing substrate surface.

2. Coating agent according to Claim 1, **characterized in that** the platelet-shaped pigments are metal pigments with a corrosion-resistant coating.

3. Coating agent according to Claim 2, **characterized in that** the corrosion-resistant coating is selected from the group consisting of an aluminium oxide layer, a silicate layer, a chromium oxide-containing layer, an acrylate layer and layers thereof arranged one above the other.

4. Coating agent according to Claim 2 or 3, **characterized in that** the metal pigments are produced from metals and/or metal alloys which are selected from the group consisting of aluminium, zinc, tin, copper, iron, titanium, steel, and alloys thereof, preferably gold-bronze.

5. Coating agent according to Claim 4, **characterized in that** the metal pigments are silicate-coated aluminium, zinc, tin, copper, iron, titanium, steel or gold-bronze pigments.

6. Coating agent according to one of the preceding claims, **characterized in that** functionalized silane surface-modifying agents are applied to the corrosion-stable coating of the pigments.

7. Coating agent according to one of Claims 3 to 6, **characterized in that** colour pigments are additionally incorporated into the corrosion-stable coating, preferably a silicate layer.

8. Coating agent according to one of the preceding claims, **characterized in that** the corrosion-resistant platelet-shaped pigments, preferably corrosion-stable metal pigments, are substantially circular or oval and are of a maximum diameter of 1 to 250 µm, preferably of 5 µm to 70 µm.

9. Coating agent according to one of the preceding claims, **characterized in that** the bonding agent is a metal complex with one or more organic ligands, where the metal complex contains as central ion(s) one or more metal cations which are selected from the group consisting of B, Al, Si, Ge, Sn, Pb, Ti, Zr, V, Cr, Mo, Mn, Fe, Zn and mixtures thereof and the metal complex has at least two functional groups or ligands which with hydroxyl groups form a complex or produce a covalent bond or are displaced out of the complex by hydroxyl groups with the formation of an oxygen-central cation bond.

10. Coating agent according to Claim 9, **characterized in that** at least two hydrolysable inorganic or organic ligands or two hydroxyl ions are co-ordinated on the one metal cation or the plurality of metal cations of the metal complex.

11. Coating agent according to Claim 9 or 10, **characterized in that** at least one organic ligand is co-ordinated on the one metal cation or the plurality of metal cations of the metal complex by way of a carboxyl group or a plurality of carboxyl groups.

12. Coating agent according to one of the preceding Claims 9 to 11, **characterized in that** at least one organic ligand is hydrophobic.

13. Coating agent according to one of the preceding Claims 9 to 12, **characterized in that** at least one organic ligand has at least one functional group which is able to react with optional constituents of the coating agent.

14. Coating agent according to one of the preceding Claims 9 to 13, **characterized in that** the metal complex can be obtained by the following steps:
(a) neutralizing a carboxylic acid which has 3 to 30 carbon atoms, with a volatile basic nitrogen compound, preferably ammonia and/or a volatile amine compound,
(b) adding at least one water-soluble salt of a metal which is selected from the group consisting of B, Al, Si, Ge, Sn, Pb, Ti, Zr, V, Cr, Mo, Mn, Fe, Zn and mixtures thereof, to the mixture from step (a), and
(c) optionally adding a volatile basic nitrogen compound, preferably ammonia and/or a volatile amine compound, to the mixture from step (b).

15. Coating agent according to one of Claims 1 to 8, **characterized in that** the bonding agent is a functionalized organosilane RₙSiX₄₋ₙ, wherein n = 0 to 2 and R stands for a substituted or unsubstituted organic residue, preferably alkyl, aryl, alkylaryl or arylalkyl, and X stands for functional groups and/or for substituted or unsubstituted organic residues which form complexes with hydroxyl groups and/or react with hydroxyl groups to form a covalent bond and/or are displaced out of the organosilane by hydroxyl groups with the formation of an oxygen-silicon bond.

16. Coating agent according to one of Claims 1 to 8, **characterized in that** the coating agent comprises as bonding agent a metal complex according to one of Claims 9 to 14 and a functionalized silane according to Claim 15.

17. Coating agent according to one of Claims 1 to 16, **characterized in that** the liquid phase is selected from the group consisting of water, aqueous phase, organic solvent or mixtures thereof, preferably mixtures substantially consisting of water.

18. Coating agent according to Claim 13, **characterized in that** the at least one ligand with the at least one functional group is reacted with aminofunctional silicone oil, silicone resin or carboxylfunctional wax.

19. Coating agent according to one of the preceding claims, **characterized in that** the coating agent further comprises reactive binding agent with at least one free carboxyl group, hydroxyl group and/or amino group.

20. Coating agent according to one of the preceding claims, **characterized in that** contained in the coating agent are about 2 to about 20% by weight of corrosion-resistant pigments, preferably about 4 to about 16% by weight, with respect to the total weight of the coating agent.

21. Coating agent according to one of the preceding claims, **characterized in that** contained in the coating agent is about 10% by weight to 20% by weight of binding agent, with respect to the total weight of the coating agent.

22. Coating agent according to one of the preceding claims, **characterized in that** the total solid content in the coating agent is about 10 to 35% by weight, preferably about 15 to 30% by weight, with respect to the total weight of the coating agent.

23. Coating agent according to one of the preceding claims, **characterized in that** the coating agent further comprises additives, such as fungicides, insecticides, algicides, thickening agents, anti-foam agents, anti-settlement agents, auxiliary binding agents and/or dissolution aids.

24. Coating agent according to one of the preceding claims, **characterized in that** the cellulose-containing substrate surface contains wood, wood chip-containing materials, paper and/or paper-containing materials.

25. Use of a coating agent according to one of Claims 1 to 24 for coating cellulose-containing substrate surfaces, preferably wood, wood chip-containing materials, particularly building materials, or paper or paper-containing materials.

26. Use of a coating agent according to Claim 25 for priming cellulose-containing substrate surfaces for the production of weathering-stable building elements and façade claddings.

27. Cellulose-containing substrate surface **characterized in that** the substrate surface is coated with a coating agent according to one of Claims 1 to 24.

28. Cellulose-containing substrate surface according to Claim 27, **characterized in that** the substrate surface is the surface of wood material, wood-containing material, paper, paper-containing material or chemically and/or physically modified wood material.

## Revendications

1. Agent de revêtement pour surfaces de substrat contenant de la cellulose, avec une phase liquide et un liant, **caractérisé en ce que** l'agent de revêtement comprend des pigments en paillettes et un agent adhésif, où les pigments en paillettes sont résistants à la corrosion et opaques à la lumière UV et où l'agent adhésif réalise une liaison entre les pigments en paillettes, le liant et la surface de substrat contenant de la cellulose.

2. Agent de revêtement selon la revendication 1, **caractérisé en ce que** les pigments en paillettes sont des pigments métalliques avec un revêtement résistant à la corrosion.

3. Agent de revêtement selon la revendication 2, **caractérisé en ce que** le revêtement résistant à la corrosion est choisi dans le groupe qui consiste en une couche d'oxyde d'aluminium, une couche de silicate, une couche contenant de l'oxyde de chrome, une couche acrylate et des couches superposées de celles-ci.

4. Agent de revêtement selon la revendication 2 ou 3, **caractérisé en ce que** les pigments métalliques sont préparés à partir de métaux et/ou d'alliages métalliques, qui sont choisis parmi le groupe qui consiste en l'aluminium, le zinc, l'étain, le cuivre, le fer, le titane, l'acier et leurs alliages, de préférence le bronze d'or.

5. Agent de revêtement selon la revendication 4, **caractérisé en ce que** les pigments métalliques sont des pigments en aluminium, zinc, étain, cuivre, fer, titane, acier, bronze d'or, revêtus de silicate.

6. Agent de revêtement selon l'une des revendications précédentes, **caractérisé en ce que** sur le revêtement résistant à la corrosion des pigments, sont appliqués des agents de modification de surface, silanes fonctionnalisés.

7. Agent de revêtement selon l'une des revendications 3 à 6, **caractérisé en ce que** dans le revêtement résistant à la corrosion, de préférence une couche de silicate, des pigments colorés sont incorporés en outre.

8. Agent de revêtement selon l'une des revendications précédentes, **caractérisé en ce** les pigments en paillettes, résistant à la corrosion, de préférence des pigments métalliques stables à la corrosion, sont essentiellement ronds ou ovales et présentent un diamètre maximal de 1 à 250 µm, de préférence de 5 µm à 70 µm.

9. Agent de revêtement selon l'une des revendications précédentes, **caractérisé en ce que** l'agent adhésif est un complexe métallique avec un ou plusieurs ligands organiques, où le complexe métallique contient comme ion central, un ou plusieurs cations métalliques, qui sont choisis parmi le groupe qui consiste en B, Al, Si, Ge, Sn, Pb, Ti, Zr, V, Cr, Mo, Mn, Fe, Zn et leurs mélanges et le complexe métallique présente au moins deux groupes ou ligands fonctionnels, qui forment un complexe avec les groupes hydroxyle ou forment une liaison covalente ou sont éliminés du complexe par les groupes hydroxyle avec formation d'une liaison oxygène-cation central.

10. Agent de revêtement selon la revendication 9, **caractérisé en ce que** sur le cation central ou les cations centraux du complexe métallique, sont coordinés au moins deux ligands organiques ou inorganiques, hydrolysables ou deux ions hydroxyle.

11. Agent de revêtement selon la revendication 9 ou 10, **caractérisé en ce qu'**au moins un ligand organique est coordiné au cation métallique ou aux cations métalliques du complexe métallique par un groupe carboxyle ou plusieurs groupes carboxyle.

12. Agent de revêtement selon l'une des revendications précédentes 9 à 11, **caractérisé en ce qu'**au moins un ligand organique est hydrophobe.

13. Agent de revêtement selon l'une des revendications précédentes 9 à 12, **caractérisé en ce qu'**au moins un ligand organique présente au moins un groupe fonctionnel, qui peut réagir avec des constituants optionnels de l'agent de revêtement.

14. Agent de revêtement selon l'une des revendications précédentes 9 à 13, **caractérisé en ce que** le complexe métallique est accessible par les étapes suivantes :
(a) neutralisation d'un acide carboxylique, qui présente 3 à 30 atomes de carbone, avec un composé azoté volatil, de préférence l'ammoniac et/ou un composé amine volatil,
(b) addition d'au moins un sel soluble dans l'eau d'un métal, qui est choisi parmi le groupe qui consiste en B, Al, Si, Ge, Sn, Pb, Ti, Zr, V, Cr, Mo, Mn, Fe, Zn et leurs mélanges, au mélange de l'étape (a),
(c) le cas échéant, addition d'un composé azoté basique volatil, de préférence l'ammoniac et/ou un composé amine volatil, au mélange de l'étape (b).

15. Agent de revêtement selon l'une des revendications 1 à 8, **caractérisé en ce que** l'agent adhésif est un organosilane fonctionnalisé, RₙSiX₄₋ₙ, où n = 0 à 2 et R représente un reste organique substitué ou non substitué, de préférence alkyle, aryle, alkylaryle ou arylalkyle, et X représente des groupes fonctionnels et/ou des restes organiques substitués ou non substitués, qui forment des complexes avec les groupes hydroxyle et/ou qui réagissent avec les groupes hydroxyle pour former une liaison covalente et/ou qui peuvent être éliminés de l'organosilane par les groupes hydroxyle pour former une liaison oxygène-silicium.

16. Agent de revêtement selon l'une des revendications 1 à 8, **caractérisé en ce que** dans l'agent de revêtement, un complexe métallique selon l'une des revendications 9 à 14 et un organosilane fonctionnalisé selon la revendication 15, sont présents comme agent adhésif.

17. Agent de revêtement selon l'une des revendications 1 à 16, **caractérisé en ce que** la phase liquide est choisie parmi le groupe qui consiste en l'eau, une phase aqueuse, un solvant organique ou leurs mélanges, de préférence des mélanges, qui consistent essentiellement en eau.

18. Agent de revêtement selon la revendication 13, **caractérisé en ce que** le au moins un ligand avec le au moins un groupe fonctionnel a réagi avec une huile de silicone ou résine de silicone à fonction amino ou une cire à fonction carboxy.

19. Agent de revêtement selon l'une des revendications précédentes, **caractérisé en ce que** l'agent de revêtement contient en outre, un liant réactif avec au moins un groupe carboxyle, groupe hydroxyle et/ou groupe amino libre.

20. Agent de revêtement selon l'une des revendications précédentes, **caractérisé en ce que** dans l'agent de revêtement, environ 2 à environ 20% en poids de pigments résistant à la corrosion, de préférence environ 4 à environ 16% en poids, sur base du poids total de l'agent de revêtement, sont présents.

21. Agent de revêtement selon l'une des revendications précédentes, **caractérisé en ce que** dans l'agent de revêtement, environ 10 à environ 20% en poids de liant, sur base du poids total de l'agent de revêtement, sont présents.

22. Agent de revêtement selon l'une des revendications précédentes, **caractérisé en ce que** la teneur en matières solides dans l'agent de revêtement, se situe dans l'intervalle allant d'environ 10 à 35% en poids, de préférence environ 15 à 30% en poids, sur base du poids total de l'agent de revêtement.

23. Agent de revêtement selon l'une des revendications précédentes, **caractérisé en ce que** l'agent de revêtement comprend en outre, des additifs comme des fongicides, des insecticides, des algicides, des épaississants, des anti-mousse, des agents anti-dépôt, des liants auxiliaires et/ou des solvants auxiliaires.

24. Agent de revêtement selon l'une des revendications précédentes, **caractérisé en ce que** la surface de substrat contenant de la cellulose comprend le bois, des matériaux contenant des copeaux de bois, le papier et/ou des matériaux contenant du papier.

25. Utilisation d'un agent de revêtement selon une des revendications 1 à 24, pour le revêtement de surfaces de substrat contenant de la cellulose, de préférence de bois, de matériaux contenant des copeaux de bois, en particulier des matériaux de construction, ou du papier ou des matériaux contenant du papier.

26. Utilisation d'un agent de revêtement selon la revendication 25, comme couche de base pour surfaces de substrat contenant de la cellulose, pour la préparation d'éléments de construction et de chemisages de façades, stables aux intempéries.

27. Surfaces de substrat contenant de la cellulose, **caractérisées en ce que** la surface de substrat est revêtue d'un agent de revêtement selon une des revendications 1 à 24.

28. Surfaces de substrat contenant de la cellulose, selon la revendication 27, **caractérisées en ce que** la surface de substrat est la surface de matériaux en bois, de matériaux contenant du bois, de papier, de matériaux contenant du papier ou de matériaux en bois modifiés chimiquement et/ou physiquement.
